Europäisches Patentamt

(19) European Patent Office

Office européen des brevets

(11) Publication number: **0 237 499**
**B1**

# (12) EUROPEAN PATENT SPECIFICATION

(45) Date of publication of patent specification: **22.08.90**

(21) Application number: **87830081.3**

(22) Date of filing: **05.03.87**

(51) Int. Cl.⁵: **B 60 Q 1/00,** B 60 K 37/06

(54) A switch stalk for a steering column.

(30) Priority: **10.03.86 IT 2117886 u**

(43) Date of publication of application:
**16.09.87 Bulletin 87/38**

(45) Publication of the grant of the patent:
**22.08.90 Bulletin 90/34**

(84) Designated Contracting States:
**DE ES FR GB**

(56) References cited:
**EP-A-0 160 905**
**FR-A-2 317 752**
**GB-A-1 466 824**
**US-A-4 219 709**

(73) Proprietor: **CAVIS CAVETTI ISOLATI S.p.A.**
**Via Roma, 31**
**I-15023 Felizzano (Alessandria) (IT)**

(72) Inventor: **Codrino, Giuseppe**
**Via Stazione 2**
**I-15028 Quattordio (Alessandria) (IT)**

(74) Representative: **Cicogna, Franco**
**Ufficio Internazionale Brevetti Dott.Prof. Franco**
**Cicogna Via Visconti di Modrone, 14/A**
**I-20122 Milano (IT)**

Courier Press, Leamington Spa, England.

## Description

The present invention relates to a switch stalk which can be fitted to the steering column of a motor vehicle closely adjacent the steering wheel.

At present most motor vehicles are provided with electrical switches for controlling important vehicle functions such as headlights, windscreen wipers, direction indicators etcetera close to the steering wheel on switch stalks or levers which extend radially from the steering column close to the steering wheel. One such known switch stalk has an actuating knob which is rotatable for the different actions about an axis substantially coincident with the axis of the stalk. This known switch stalk, however, extends merely in a straight line from the steering column, and, in some cases, difficulties are encountered in seeking to operate the switch in that the control knob is not always in the most suitable position for easy actuation. Although ideally the driver should not have to take his hands off the steering wheel whilst driving it is a disadvantage of the known structure that in fact, in many cases, the user has to remove his hand from the steering wheel for a short time in order to operate the switch, and this can be inconvenient if the actuating knob is not directly and easily accessible to the driver's fingers.

The French reference 2,317,752 discloses a switch lever structure having substantially the features of the pre-characterising part of the claim. The object of the present invention is that of providing a switch lever structure which allows the actuating knob to be disposed at a point which is immediately accessible to the driver's fingers, and which in the meanwhile allows a rotation torque applied to the actuating knob to be transmitted in a simple way by a conventional flexible Bowden cable, even though the knob is disposed at an angle to the length of the main part of the body of the lever stalk.

According to the present invention there is provided a switch stalk structure adapted to be fitted to a steering column adjacent the steering wheel of a motor vehicle, having the features of the characterising part of the claim.

A particular advantage of the invention is that it provides a switch stalk structure in which it is possible for the actuating knob to be disposed with an axis of rotation which greatly facilitates its utilisation; in fact the knob itself can be positioned with an inclination which can be reached instinctively by the hand of the driver.

Another advantage of the present invention is that it provides a switch lever structure which can be fitted to the steering column of a motor vehicle and which, because of its structural characteristics, is able to offer the widest guarantees of reliability and safety in use.

One embodiment of the present invention will now be more particularly described, by way of example, with reference to the accompanying drawings, in which:

Figure 1 is a longitudinal section through a switch stalk structure according to the invention;

Figure 2 is a cross section taken on the line II—II of Figure 1;

Figure 3 is a cross section taken on the line III—III of Figure 1, and

Figure 4 is a cross section taken on the line IV—IV of Figure 1.

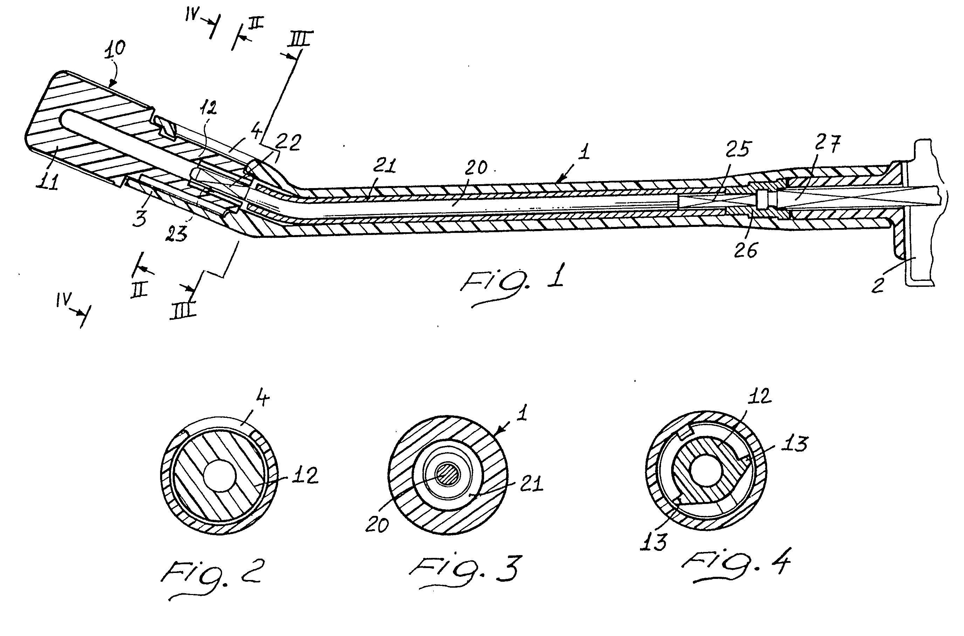

Referring now to the drawings, a switch stalk for a motor vehicle comprises a stalk body 1 formed by a tubular section of plastics materials which can be fitted at one end to the steering column, generally indicated with the reference numeral 2, of a motor vehicle. At is free end the stalk body 1 has a free end section 3 which is inclined towards the steering wheel of the motor vehicle. The free end section 3 has a substantially cylindrical cup-shape conformation and is provided, over a part of its side surface, with a viewing window indicated 4.

An actuating knob 10 is rotatably connected to the free end section 3. The actuating knob 10 has a knob body 11, lying outside the stalk body 1 in continuation of the free end section 3 thereof, and an inner spigot 12 which is rotatably housed within the free section 3 and which is provided, on its surface with appropriate ideograms or other graphic indications, which can be viewed through the viewing window 4 to indicate the switching function corresponding to the selected position of the knob 10.

The inner spigot 12, as is illustrated in Figure 4, has stop tongues 13 for defining the end position to which the knob 10 can be moved by rotation about an axis parallel to that of the adjacent part of the stalk body 1.

A flexible Bowden cable 20 is connected to the said actuating knob 20, which cable extends within the stalk body 1 and is housed in a sheath or spiral containment tube 21. At its free end the flexible cable 20 has a first shaped pin 22 which engages in a first socket 23, moulded within the actuating knob spigot 12, whilst at the other end it has a second shaped pin 25. This latter engages in a socket 26 which is connected to a pin 27 which is rotatably fitted to the steering column of the steering wheel.

The flexible Bowden cable 20 therefore allows the rotation applied to the actuating knob 10 to be transmitted in a simple way even though the knob 10 itself is disposed at an angle to the length of the main part of the body of the stalk, because the flexible cable gives the possibility of transmitting the rotation along the axis of the lever even though this latter has a terminal inclined section.

The presence of a connection between the pin and the actuating knob formed by means of the flexible Bowden cable allows obstruction of the mechanism due to twisting or the like to be eliminated.

## Claim

A switch stalk structure adapted to be fitted to a steering column adjacent the steering wheel of a motor vehicle, comprising a stalk body (1) which when fitted to a steering column (2) extends

2

substantially radially from the steering wheel, the stalk body (1) having a free end section carrying an actuating knob (10) rotatably thereon, said knob being operatively connected to a flexible cable (20) extending axially within said stalk body (1) and connected at its other end to a switch actuating pin (27) rotatably mounted on said column, said free end section extending toward the steering wheel inclined with respect to the remaining part of said stalk so as to be immediately accessible to a driver's fingers, and having a substantially cylindrical cup-like conformation with a viewing window (4) in its side wall, said actuating knob having an inner spigot portion extending within said free end section and having on its surface ideograms or the like which can be viewed through said window, characterized in that said flexible cable (20) is housed within a tubular sheath (21) and has at one end a first shaped pin (22) engageable in a socket (23) moulded in said inner spigot (12) of said knob (10) and, at the other end, a second shaped pin (25) engageable in a socket (26) rigidly connected to said switch actuating pin (27) mounted on the steering column.

**Patentanspruch**

Schalterhebel für eine Lenksäule, der zur Anbringung an einer Lenksäule neben dem Steuerrad eines Fahrzeuges geeignet ist, mit einem Hebelkörper (1) der, als an der Lenksäule (2) angebracht ist, wesentlich radial zum Steuerrad erstreckt sich, wobei der Hebelkörper (1) ein einem rotierende Schaltknopf (10) tragende Freieende verseht, wobei dieser Knopf mit einem schmiegsamen Seil (20) wirkgekoppelt und sieses Seil innerhalb der obengenannte Hebelkörper (1) erstreckt sich und mit seinem anderen Ende mit einem auf der obengenannten Lenksäule drehangebrachten Schaltstift (27) verbunden ist, wobei das freie Ende nach dem Steuerrad gebogen zum übrigen Teil des obigen Hebels erstreckt sich, somit unmittelbar von der Fahrerfinger erreicht werden kann, un einem wesentlich tassenförmige Gestalten mit einem Fenster (4) auf seinem Seitenteil verseht, wobei der obige Schaltknopf eine innerhalb des obigen freien Endes sich erstreckende innere Schaftportion wie auch durch das obige Fenster schaubaren Symbolen oder dergleichen verseht, dadurch gekennzeichnet, daß das obengennante schmiegsame Seil (20) innerhalb eine röhrenförmige Hülle (21) aufgenommen ist und an einem Ende einen erste verformte Zapfen (22) verseht, der in einer in dem obigen inneren Schaft (12) geformten Aufnahme (23) des obigen Knopf (10) eingreifbar ist, und an dem anderen Ende einen zweite verformte Zapfen (25), der in einer mit dem auf den Lenksäule angebrachten obengenannten Schaltstift (27) vestverbundenen Aufnahme (26) eingreifbar ist.

**Revendication**

Structure de tige de commutateur apte à être appliquée à une colonne de direction adjacente au volant d'un véhicule à moteur, comprenant un corps (1) de la tige qui, comme elle est appliquée à une colonne de direction (2), s'étend essentiellement radiale à partir du volant, le corps (1) de la tige présentant une section d'extrémité libre qui porte une poignée (10) d'opération pivotable sur celle-ci, ladite poignée étant jointe opérativement avec un câble flexible (20) s'étendant axialement dans ledit corps (1) de la tige et étant raccordé par l'autre de ses extrémités avec un tourillon (27) d'opération du commutateur assemblé pivotable sur ladite colonne, ladite section d'extrémité pivotable s'étendant envers le volante inclinée par rapport à la partie restante de ladite tige ainsi de pouvoir être accessible immédiatement par les doigts de conducteur, et présentant une conformation en forme de coupe essentiellement cylindrique avec une fenêtre (4) sur son côté latéral, ladite poignée d'opération présentant une portion en forme de queue intérieure s'étandant dans ladite section d'extrémité libre et présentant sur sa surface idéogrammes ou similaires qu'on peut les voir à travers ladite fenêtre, caractérisée en ce que ledit câble flexible (20) est logé dans une gaine tubulaire (21) et présente sur l'une de ses extrémités un premier tourillon gabarié (22) pouvant s'engager dans un logement (23) formé dans ladite queue intérieure (12) de ladite poignée (10) et à l'autre extrémité, un deuxième tourillon gabarié (25) pouvant s'engager dans un logement (26) reccordé rigidement avec ledit tourillon (27) d'operation du commutateur assemblé sur la colonne de direction.

Fig. 1

Fig. 2

Fig. 3

Fig. 4

EP 0 237 499 B1